# EUROPÄISCHE PATENTSCHRIFT

(11) **EP 1 695 159 B1**
(45) Veröffentlichungstag und Bekanntmachung des Hinweises auf die Patenterteilung: **06.04.2011**
(21) Anmeldenummer: 04803922.6
(22) Anmeldetag: 15.12.2004
(51) Int. Cl.: G05B 19/05

(54) **REDUNDANTES STEUERSYSTEM**
REDUNDANT CONTROL SYSTEM
SYSTEME DE COMMANDE REDONDANT

(30) Priorität: 16.12.2003 DE 10358989
(43) Veröffentlichungstag der Anmeldung: 30.08.2006
(73) Patentinhaber: SIEMENS AKTIENGESELLSCHAFT, 80333 München (DE)
(72) Erfinder: KREB, Walter, 76848 Schwanheim (DE); LEHMANN, Ulrich, 76744 Wörth (DE)
(86) Internationale Anmeldenummer: PCT/EP2004/014306
(87) Internationale Veröffentlichungsnummer: WO 2005/059665

(56) Entgegenhaltungen:
- DE-A1- 4 415 541
- SYKORA M R: "THE DESIGN AND APPLICATION OF REDUNDANT PROGRAMMABLE CONTROLLERS" CONTROL ENGINEERING, CONTROL ENGINEERING. NEW YORK, US, Bd. 29, Nr. 8, Juli 1982 (1982-07), Seiten 77-79, XP002057993

## Beschreibung

Die Erfindung betrifft ein redundantes Steuersystem mit einem ersten und einem zweiten Steuerrechner, an welche jeweils eine Peripherieeinheit angeschlossen ist, und mit einem Zweileiter-Messumformer, welcher mit einem ersten und mit einem zweiten Anschluss an die Peripherieeinheiten angeschlossen ist, wobei der Zweileiter-Messumformer in Abhängigkeit einer zu erfassenden Größe den Peripherieeinheiten einen Messstrom einprägt.

Aus dem Siemens-Katalog ST 70, Kapitel 1 und 5, Ausgabe 2003 sind das hochverfügbare Automatisierungssystem SIMATIC S7-400H mit redundant ausgelegtem Aufbau sowie die Anschaltung IM153-2, die zum Anschluss einer Peripherieeinheit ET 200M als Slave in redundanten PROFIBUS-DP-Systemen mit dem Automatisierungssystem SIMATIC S7-400H einsetzbar ist, bekannt.

In vielen Bereichen der Automatisierungstechnik werden immer höhere Anforderungen an die Verfügbarkeit und damit an die Ausfallsicherheit der Automatisierungssysteme gestellt. Es sind Bereiche, in denen ein Anlagenstillstand sehr hohe Kosten verursachen würde. Hier können nur redundante Systeme den Anforderungen an die Verfügbarkeit gerecht werden. Beispielsweise die hochverfügbare SIMATIC S7-400H arbeitet auch dann weiter, wenn durch einen oder mehrere Fehler Teile der Steuerung ausgefallen sind. Sie besitzt redundant ausgelegte zentrale Funktionen und ist mit zwei getrennten Zentralgeräten als Steuerrechner aufgebaut. Die beiden Steuerrechner arbeiten zyklisch und synchron die gleichen Verarbeitungsprogramme ab. Sie überwachen sich gegenseitig und legen selbständig fest, welcher Steuerrechner aktiv ist, d. h. tatsächlich über seine Ausgabedaten den Prozess steuert. Hierzu werden Daten über eine Redundanzkopplung zwischen den beiden Steuerrechnern ausgetauscht. Redundant ausgebildete dezentrale Peripherieeinheiten ET 200M, in welche je nach Einsatzfall digitale Ein-/Ausgabebaugruppen gesteckt sind, sind jeweils mit einem Feldbus PROFIBUS-DP an die einen Steuerrechner angeschlossen. Mit Hilfe von Messumformern oder -gebern gewonnene Prozesseingangsinformationen werden durch die Peripherieeinheit an beide Steuerrechner weitergeleitet. Beim so genannten "Hot Stand By"-Betrieb arbeiten die beiden Steuerrechner im ungestörten Fall gleichzeitig dasselbe Steuerprogramm ab, es ist jedoch nur ein Steuerrechner aktiv, d. h., nur die Ausgabedaten eines Steuerrechners werden zur Steuerung des Prozesses weiterverarbeitet. Im Fehlerfall übernimmt das intakte Gerät allein die Steuerung des Prozesses. Dazu erhalten die Geräte automatisch das gleiche Anwenderprogramm, die gleichen Datenbausteine, die gleichen Prozessabbildinhalte sowie die gleichen internen Daten, wie z. B. Zeiten, Zähler, Merker usw. Dadurch sind beide Geräte immer auf dem aktuellen Stand und können im Fehlerfall jederzeit die Steuerung alleine weiterführen. Prozessausgabedaten, durch welche die an die Stellglieder von der Peripherieeinheit auszugebenden Signale vorgegeben werden, werden der Peripherieeinheit im ungestörten Fall über beide Feldbusse angeboten, sie wertet jedoch nur die von einem der Feldbusse empfangenen Steuerdaten aus. Der jeweils angeschlossene Steuerrechner kann somit als der aktive Steuerrechner bezeichnet werden.

Häufig werden als Messumformer so genannte Zweileiter-Messumformer eingesetzt, die in Abhängigkeit einer zu erfassenden Größe, z. B. eine Größe in Form einer Temperatur oder eines Druckes, Peripherieeinheiten in Form von Analogeingabeeinheiten einen Messstrom einprägen. In einem redundanten System ist ein derartiger Messumformer mit seinen Anschlüssen an zwei Analogeingabeeinheiten angeschlossen, wobei während eines reparaturbedingten Austausches einer Analogeingabeeinheit die andere Analogeingabeeinheit die Messung übernimmt. Damit eine derartige kontinuierliche Messung bewirkt werden kann, sind z. B. an den Anschlüssen (Messeingänge) der Analogeingabeeinheiten Zenerdioden vorgesehen, welche gewöhnlich außerhalb dieser Einheiten, z. B. in der so genannten Verdrahtungsebene im Bereich des zu steuernden technischen Prozesses, verschaltet werden. Nachteilig ist insbesondere, dass durch diese zusätzlichen Bauelemente die Verdrahtung aufwendig ist und der Bürdenwiderstand abhängig ist von der Anzahl der gerade eingesetzten Analogeingabeeinheiten; denn in einem redundanten Betrieb sind zwei Analogeingabeeinheiten im Einsatz, dagegen ist im nichtredundanten Betrieb, z. B. während eines Austauschs einer Analogeingabeeinheit, nur eine Analogeingabeeinheit im Betrieb. Ein veränderlicher Bürdenwiderstand ist insbesondere dann störend, wenn der Messumformer die Anforderungen gemäß HART-Spezifikation erfüllen muss und HART-Signale übertragen werden.

DE 44 15 541 A1 offenbart eine fehlertolerante programmierbare Steuerung mit Ausgabeeinheiten, wobei Maßnahmen vorgeschlagen werden, um einen vollständigen fehlertoleranten Betrieb einer Last zu ermöglichen.

Ein redundantes Steuersystem gemäß dem Oberbegriff des Patentanspruchs ist aus der Druckschrift "The Design and Application of Redundant Programmable Controllers", Sykora Mark R., Control Engineering, New York, US, Bd. 29, Nr. 8, Juli 1982, Seiten 77 bis 79, XP002057993 bekannt. Maßnahmen, um einen Austausch einer Peripherieeinheit im Wesentlichen rückwirkungsfrei im Hinblick auf den Bürdenwiderstand zu ermöglichen, sind nicht vorgesehen.

Der Erfindung liegt die Aufgabe zugrunde, ein redundantes Steuersystem der eingangs genannten Art zu schaffen, in welchem der Austausch einer Peripherieeinheit im Wesentlichen rückwirkungsfrei im Hinblick auf den Bürdenwiderstand ermöglicht wird. Diese Aufgabe wird durch die im kennzeichnenden Teil des

Patentanspruchs angegebenen Maßnahmen gelöst.

Vorteilhaft ist, dass in der Verdrahtungsebene keine Zenerdioden mehr erforderlich sind.

Unabhängig davon, ob das Steuersystem im redundanten oder nichtredundanten Betrieb arbeitet, ist der Bürdenwiderstand konstant. Der Bürdenwiderstand wird durch die in Serie geschalteten Messwiderstände von zwei Messkreisen gebildet. Im nichtredundanten Betrieb sind die zwei Messkreise einer Peripherieeinheit in Serie geschaltet, im redundanten Betrieb ist ein Messkreis einer der beiden Peripherieeinheiten mit einem Messkreis der anderen Peripherieeinheit in Serie geschaltet. Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: eine Verschaltung von zwei redundanten Peripherie- einheiten und
- Figur 2: ein redundantes Steuersystem.

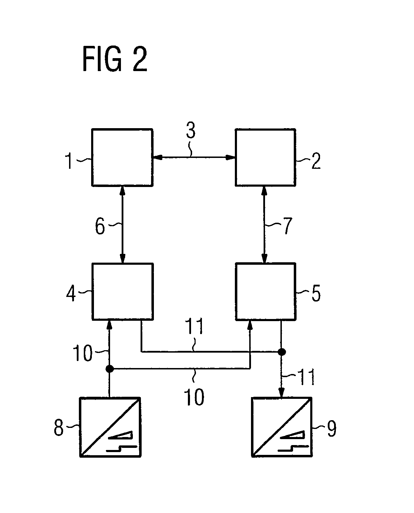

Es wird zunächst auf Figur 2 verwiesen, in welcher ein an sich bekanntes redundantes Steuersystem dargestellt ist. Das redundante Steuersystem ist gemäß einem 1-von-2-Prinzip aufgebaut und umfasst eine erste Redundanzeinheit mit einem ersten Steuerrechner 1 und einer ersten Peripherieeinheit 4 und eine zweite Redundanzeinheit mit einem zweiten Steuerrechner 2 sowie einer Peripherieeinheit 5. Sensoren 8, z. B. so genannte Zweileiter-Messumformer, erfassen Prozesssignale eines zu steuernden technischen Prozesses, welche von den Peripherieeinheiten 4, 5 über Leitungen 10 eingelesen und über geeignete serielle oder parallele Busse 6, 7 den Steuerrechnern 1, 2 in Form von digitalen Signalen übermittelt werden. Die Steuerrechner 1, 2 verarbeiten diese Signale zu entsprechenden Steuersignalen für Aktoren 9, wobei nur eine der Redundanzeinheiten diese Steuersignale den Aktoren 9 über eine Leitung 11 übermittelt. Die Redundanzeinheiten arbeiten nach einem Master-Reserve-Betrieb, was bedeutet, dass nur eine Redundanzeinheit aktiv ist, die andere dagegen passiv geschaltet ist. Nur die aktive Redundanzeinheit steuert die Aktoren 9 über ihre Peripherieeinheit an, die andere Redundanzeinheit übermittelt ihrer Peripherieeinheit lediglich ein Nullsignal. Zum Austausch von Informationen, z. B. in Form von Status- und Abgleichinformationen, ist eine Redundanzkopplung 3 vorgesehen, über welche die Redundanzeinheiten miteinander verbunden sind. Für den Fall, dass die aktive Redundanzeinheit nicht störungsfrei arbeitet, zeigt die aktive Redundanzeinheit über die Redundanzkopplung 3 der passiven Redundanzeinheit die Störung an, wodurch die gerade passive Redundanzeinheit in die aktive Betriebsart wechselt, d. h., diese Redundanzeinheit wird aktiv geschaltet und übernimmt den Master-Betrieb, dagegen wird die gerade aktive Redundanzeinheit passiv geschaltet und wechselt in den Reserve-Betrieb. Ein Wechsel der Masterschaft muss in der Art und Weise erfolgen, dass den Aktoren die Steuersignale im Wesentlichen kontinuierlich und möglichst ohne Signaleinbrüche übermittelt werden. Darüber hinaus ist sicherzustellen, dass während eines reparaturbedingten Austausches einer Peripherieeinheit 4, 5 eine kontinuierliche Messung der Prozesssignale gewährleistet ist. Ein durch einen Zweileiter-Messumformer den Peripherieeinheiten 4, 5 eingeprägter Messstrom, der abhängig ist von einer zu erfassenden Größe, z. B. eine Größe in Form einer Temperatur oder eines Druckes, muss z. B. für den Fall, dass die Peripherieeinheit 4 ausgefallen ist, von der Peripherieeinheit 5 erfasst werden, um eine störungsfreie Prozesssteuerung zu bewirken.

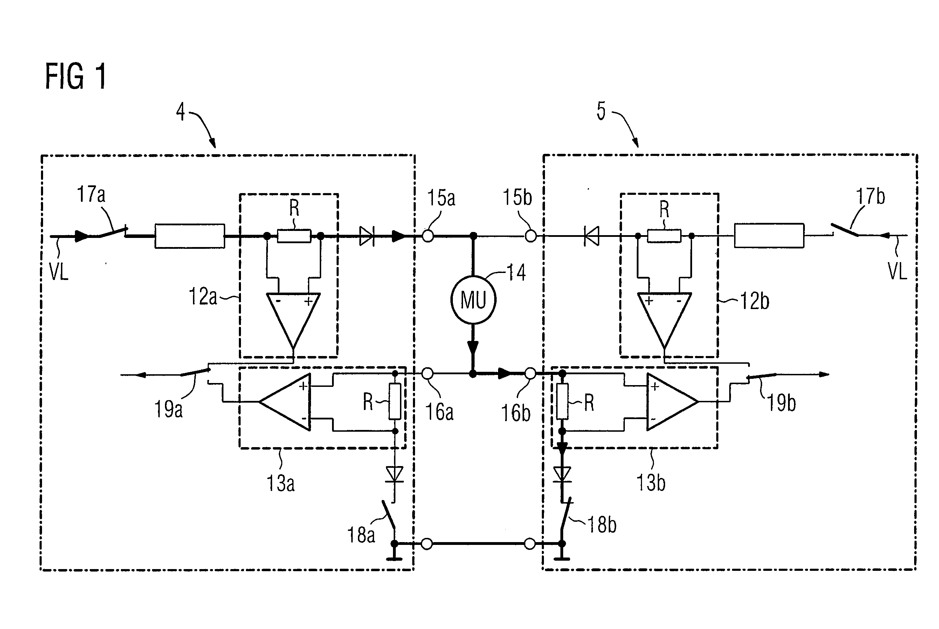

In diesem Zusammenhang wird auf Figur 1 verwiesen, in welcher eine Verschaltung von zwei redundanten Peripherieeinheiten dargestellt ist. Die in den Figuren 1 und 2 dargestellten gleichen Teile sind mit gleichen Bezugszeichen versehen.

Die redundant aufgebauten Peripherieeinheiten 4, 5 weisen jeweils erste und zweite Messkreise 12a, 13a, 12b, 13b auf, welche jeweils mit einem Messwiderstand R versehen sind, wobei der Widerstandswert des Messwiderstandes R gleich dem halben Bürdenwiderstandswert ist. Ein Zweileiter-Messumformer 14 ist mit ersten Anschlüssen 15a, 15b durch erste steuerbare Schalter 17a, 17b über die ersten Messkreise 12a, 12b an eine Versorgungsleitung VL und mit zweiten Anschlüssen 16a, 16b durch zweite steuerbare Schalter 18a, 18b über die zweiten Messkreise 13a, 13b an einen Masseanschluss der Peripherieeinheiten 4, 5 schaltbar.

Durch die Verschaltung der Peripherieeinheiten 4, 5 und durch den Aufbau dieser Einheiten 4, 5 sind vier, zwei redundante und zwei nichtredundante, Betriebsarten möglich.

Im vorliegenden Ausführungsbeispiel ist eine erste redundante Betriebsart gezeigt. Dabei ist der erste Schalter 17a der Peripherieeinheit 4 und der zweite Schalter 18b der Peripherieeinheit 5 geschlossen, dagegen ist der zweite Schalter 18a der Peripherieeinheit 4 und der erste Schalter 17b der Peripherieeinheit 5 geöffnet. Der Messstrom wird in diesem Fall durch den ersten Messkreis 12a der Peripherieeinheit 4 und durch den zweiten Messkreis 13b der Peripherieeinheit 5 erfasst (der Messstromfluss ist durch eine dick gezeichnete Linie dargestellt), wobei geeignete Operationsverstärker 19 dieser Messkreise 12a, 13b den durch den Messstrom am Messwiderstand R verursachten Spannungsabfall messen und über steuerbare Schalter 19a, 19b hier nicht dargestellten Auswerteschaltungen der Peripherieeinheiten 4, 5 übermitteln.

Eine weitere redundante Betriebsart kann dadurch bewirkt werden, dass der erste Schalter 17b der Peripherieeinheit 5 und der zweite Schalter 18a der Peripherieeinheit 4 geschlossen, dagegen der zweite Schalter 18b der Peripherieeinheit 5 und der erste Schalter 17a der Peripherieeinheit 4 geöffnet wird. Der Messstrom wird in diesem Fall durch den ersten Messkreis 12b der Peripherieeinheit 5 und durch den zweiten Messkreis 13b der Peripherieeinheit 4 erfasst, wobei die steuerbaren Schalter 19a, 19b entsprechend geschaltet werden, damit die am Widerstand R abfallende Spannung der Messkreise 12b, 13a den Auswerteschaltungen übermittelt wird.

Für den Fall, dass z. B. die Peripherieeinheit 4 gestört ist und aus dem Steuersystem entfernt werden muss, wird die Peripherieeinheit 5 in die nichtredundante Betriebsart geschaltet. In diesem Fall werden die Schalter 17b, 18b geschlossen, wodurch der Messstrom über den Widerstand R des ersten und zweiten Messkreises 12b, 13b der Peripherieeinheit 5 fließt. Dagegen arbeitet die Peripherieeinheit 4 im nichtredundanten Betrieb, falls die Peripherieeinheit 5 aus dem Steuersystem entfernt wird. Die Schalter 17a, 18a sind in diesem Fall geschlossen, wodurch der Messstrom über den Widerstand R des ersten und zweiten Messkreises 12a, 13a der Peripherieeinheit 4 fließt.

Die Schalterstellungen der steuerbaren Schalter 17a, 18a, 19a der Peripherieeinheit 4 sowie die steuerbaren Schalter 17b, 18b, 19b der Peripherieeinheit 5 sind abhängig von Steuersignalen, welche der aktive Steuerrechner den Peripherieeinheiten 4, 5 übermittelt. Z. B. bewirkt ein den Peripherieeinheiten 4, 5 zugeführter High-Pegel eines Steuersignals, dass
- die Schalter 17a, 18b geschlossen,
- die Schalter 17b, 18a geöffnet werden und ferner
- die Schalter 19a, 19b so geschaltet sind, dass der Messstrom über den ersten Messkreis 12a und den zweiten Messkreis 13b erfasst wird.

Ein Low-Pegel dieses Steuersignals bewirkt dagegen, dass
- die Schalter 17b, 18a geschlossen,
- die Schalter 17a, 18b geöffnet werden und ferner
- die Schalter 19a, 19b so geschaltet sind, dass der Messstrom über den ersten Messkreis 13a und den zweiten Messkreis 12b erfasst wird.

Ein weiterer Pegel dieses Steuersignals oder ein Pegel eines weiteren Steuersignals bewirkt, dass die jeweiligen ersten und zweiten Messkreise 12a, 13a oder 12b, 13b der gerade aktiven Peripherieeinheit 4, 5 aktiviert sind, was bedeutet, dass die Schalter 17a, 18a oder 17b, 18b geschlossen sind. Die Stellung der Schalter 19a bzw. 19b ist derart, dass der Messstrom entweder über den ersten oder zweiten Messkreis der entsprechenden Peripherieeinheit 4 oder 5 erfasst wird.

## Patentansprüche

1. Redundantes Steuersystem mit
- einem ersten und einem zweiten Steuerrechner (1, 2), an welche jeweils eine Peripherieeinheit (4, 5) angeschlossen ist,
- einem Zweileiter-Messumformer (14), welcher mit einem ersten und mit einem zweiten Anschluss (15a, 15b, 16a, 16b) an die Peripherieeinheiten (4, 5) angeschlossen ist, wobei der Zweileiter-Messumformer (14) in Abhängigkeit einer zu erfassenden Größe den Peripherieeinheiten (4, 5) einen Messstrom einprägt,
**dadurch gekennzeichnet, dass**
- jede Peripherieeinheit (4, 5) mit einem ersten und einem zweiten Messkreis (12a, 12b, 13a, 13b) zur Erfassung des Messstromes versehen ist, wobei durch einen ersten steuerbaren Schalter (17a, 17b) eine Spannungsversorgungsleitung (VL) über den ersten Messkreis (12a, 12b) an den ersten Anschluss (15a, 15b) des Zweileiter-Messumformers (14) und durch einen zweiten steuerbaren Schalter (18a, 18b) ein Massepotential über den zweiten Messkreis (13a, 13b) an den zweiten Anschluss (16a, 16b) des Zweileiter-Messumformers (14) schaltbar ist, wobei die Messkreise (12a, 12b, 13a, 13b) jeweils einen Messwiderstand (R) aufweisen, wobei der Messwiderstand (R) des ersten Messkreises (12a, 12b) zwischen dem ersten steuerbaren Schalter (17a, 17b) und dem ersten Anschluss (15a, 15b, 16a, 16b) und der Messwiderstand (R) des zweiten Messkreises (13a, 13b) zwischen dem zweiten Anschluss (15a, 15b, 16a, 16b) und dem zweiten steuerbaren Schalter (18a, 18b) geschaltet ist,
- in einer redundanten Betriebsart der erste Messkreis (12a, 12b) einer Peripherieeinheit (4, 5) mit dem zweiten Messkreis (13a, 13b) der anderen Peripherieeinheit (4, 5) in Serie geschaltet ist, wobei in Abhängigkeit eines Steuersignals in jeder Peripherieeinheit (4, 5) der Messstrom des ersten (12a, 12b) oder des zweiten (13a, 13b) Messkreises ausgewertet wird, und
- für den Fall, dass eine der Peripherieeinheiten (4, 5) gestört ist, der Messstrom über den ersten (12a, 12b) und den zweiten Messkreis (13a, 13b) der in eine nichtredundante Betriebsart geschalteten anderen Peripherieeinheit (4, 5) fließt.

## Claims

1. Redundant control system having
- a first and a second control computer (1, 2), to which in each case a peripheral unit (4, 5) is connected,
- a two-wire measuring transducer (14) which is connected by a first and by a second port (15a, 15b, 16a, 16b) to the peripheral units (4, 5), wherein the two-wire measuring transducer (14) impresses a measured current on the peripheral units (4, 5) as a function of a variable to be recorded,
**characterised in that**
- each peripheral unit (4, 5) is provided with a first and a second measuring circuit (12a, 12b, 13a, 13b) to record the measured current, whereby a voltage supply line (VL) can be switched by a first controllable switch (17a, 17b) via the first measuring circuit (12a, 12b) to the first port (15a, 15b) of the two-wire measuring transducer (14) and a frame potential can be switched by a second controllable switch (18a, 18b) via the second measuring circuit (13a, 13b) to the second port (16a, 16b) of the two-wire measuring transducer, wherein the measuring circuits (12a, 12b, 13a, 13b) in each case have a measuring resistor (R), wherein the measuring resistor (R) of the first measuring circuit (12a, 12b) is switched between the first controllable switch (17a, 17b) and the first port (15a, 15b, 16a, 16b) and the measuring resistor (R) of the second measuring circuit (13a, 13b) is switched between the second port (15a, 15b, 16a, 16b) and the second controllable switch (18a, 18b),
- in a redundant operating mode the first measuring circuit (12a, 12b) of a peripheral unit (4, 5) is switched in series with the second measuring circuit (13a, 13b) of the other peripheral unit (4, 5), wherein the measured current of the first (12a, 12b) or of the second (13a, 13b) measuring circuit is evaluated as a function of a control signal in each peripheral unit (4, 5), and
- if one of the peripheral units (4, 5) suffers interference, the measured current flows via the first (12a, 12b) and the second measuring circuit (13a, 13b) of the other peripheral unit (4, 5) switched to a non-redundant operating mode.

## Revendications

1. Système de commande redondant comprenant
- un premier et un deuxième ordinateurs ( 1, 2 ) de commande auxquels est raccordé respectivement une unité ( 4, 5 ) périphérique,
- un transducteur ( 14 ) de mesure à deux conducteurs, qui est raccordé aux unités ( 4, 5 ) périphériques par une première et par une deuxième borne ( 15a, 15b, 16a, 16b ), le transducteur ( 14 ) de mesure à deux conducteurs injectant un courant de mesure dans les unités ( 4, 5 ) périphériques en fonction d'une grandeur à détecter,
**caractérisé en ce que**
- chaque unité ( 4, 5 ) périphérique est pourvue d'un premier et d'un deuxième circuit ( 12a, 12b, 13a, 13b ) de mesure pour la détection du courant de mesure, dans lequel, par un premier interrupteur ( 17a, 17b ) pouvant être commandé, une ligne ( VL ) d'alimentation en tension peut être reliée par l'intermédiaire du premier circuit ( 12a, 12b ) de mesure à la première borne ( 15a, 15b ) du transducteur ( 14 ) de mesure à deux conducteurs et par un deuxième interrupteur ( 18a, 18b ) pouvant être commandé, un potentiel de masse peut être appliqué par l'intermédiaire du deuxième circuit ( 13a, 13b ) de mesure à la deuxième borne ( 16a, 16b ) du transducteur ( 14 ) de mesure à deux conducteurs, les circuits ( 12a, 12b, 13a, 13b ) de mesure ayant respectivement une résistance ( R ) de mesure, la résistance ( R ) de mesure du premier circuit ( 12a, 12b ) de mesure étant montée entre le premier interrupteur ( 17a, 17b ) pouvant être commandé et la première borne ( 15a, 15b, 16a, 16b ) et la résistance ( R ) de mesure du deuxième circuit ( 13a, 13b ) de mesure étant montée entre la deuxième borne ( 15a, 15b, 16a, 16b ) et le deuxième interrupteur ( 18a, 18b ) pouvant être commandé,
- dans un type de fonctionnement redondant, le premier circuit ( 12a, 12b ) de mesure d'une unité ( 4, 5) périphérique est monté en série avec le deuxième circuit ( 13a, 13b ) de mesure de l'autre unité ( 4, 5) périphérique, le courant de mesure du premier ( 12a, 12b) ou du deuxième ( 13a, 13b ) circuit de mesure étant exploité en fonction d'un signal de commande dans chaque unité ( 4, 5) périphérique, et
- dans le cas où l'une des unités ( 4, 5 ) périphériques est en panne, le courant de mesure passe par l'intermédiaire du premier ( 12a, 12b ) et du deuxième circuit ( 13a, 13b ) de mesure à l'autre unité ( 4, 5 ) périphérique montés dans un type de fonctionnement non redondant.
